# EUROPÄISCHE PATENTANMELDUNG

(11) **EP 1 916 478 A2**
(43) Veröffentlichungstag der Anmeldung: **30.04.2008**
(21) Anmeldenummer: 07105793.9
(22) Anmeldetag: 05.04.2007
(51) Int. Cl.: F23M 5/08, F23L 15/04, F23C 10/00, F26B 11/04

(54) **Heißgasbetriebene Trocknungsvorrichtung**

(30) Priorität: 24.10.2006 DE 102006050712
(71) Anmelder: Fritz Egger GmbH & Co., 3105 Unterradlberg (AT)
(72) Erfinder: Obwaller, Georg, 6393 St. Ulrich am Pillersee (AT)
(74) Vertreter: Cohausz & Florack

(57) **Zusammenfassung**

Die Erfindung betrifft eine Heißgasbetriebene Trocknungsvorrichtung mit integrierter Thermalölerhitzung, umfassend einen Kessel (1, 1*) zur Heißgaserzeugung und einen in Strömungsrichtung des Heißgases hinter dem Kessel (1, 1*) angeordneten Trockner (23), in welchen das Heißgas einströmt. Die erfindungsgemäße Trocknungsvorrichtung ist dadurch gekennzeichnet, dass der Kessel (1, 1*) eine Thermalölgekühlte Brennkammer (11, 11*) aufweist. Ferner betrifft die Erfindung ein Verfahren zur Trocknung von partikelförmigen Gut.

## Beschreibung

Die Erfindung betrifft eine heißgasbetriebene Trocknungsvorrichtung, umfassend einen Kessel zur Heißgaserzeugung und einen in Strömungsrichtung des Heißgases hinter dem Kessel angeordneten Trockner in welchen das Heißgas einströmt. Ferner betrifft die Erfindung ein Verfahren zur Trocknung von partikelförmigen Gut.

Heißgasbetriebene Trocknungsvorrichtungen sind aus dem Stand der Technik bekannt. In der holzverarbeitenden Industrie werden sie regelmäßig eingesetzt, um partikelförmige Güter, z.B. Späne, zu trocknen. Gleichzeitig wird die hohe Temperatur des im Kessel der Vorrichtung erzeugten Heißgases zur Erhitzung von Thermalöl als Wärmeträgermedium verwendet. Das Thermalöl seinerseits kann zum Beheizen einer Heißpresse herangezogen werden, in welcher beispielsweise Spanplatten gepresst werden. Konventionelle Heißgaskessel weisen eine ausgemauerte Brennkammer auf, in welcher feste, granulatförmige oder staubförmige Brennstoffe verbrannt werden. Um eine Brennkammertemperatur von ca. 950°C, oberhalb derer es zu einer Verschlackung der Brennstoffe kommen würde, nicht zu überschreiten, muss die Verbrennung mit einem hohen Luftüberschuss erfolgen. Dies hat zur Folge, dass ein sehr hoher Heißgasvolumenstrom erzeugt wird, welcher nach teilweisem Durchgang durch einen Wärmetauscher, in dem das Heißgas einen Teil seiner Wärmeenergie an das zu erhitzende Thermalöl abgibt, nur noch eine vergleichsweise geringe Temperatur von ca. 600°C aufweist. Dieser vergleichsweise niedrig temperierte Volumenstrom kann entsprechend nur mit einer geringen Menge an aus dem Trockner austretender, entstaubter Umluft gemischt werden, um in einer Mischkammer die geforderte Trocknereintrittstemperatur von beispielsweise ca. 470°C einzustellen. Entsprechend wird ein hoher Volumenstrom des aus dem Trockner austretenden Gases der Abluftreinigung zugeführt und entweicht in die Atmosphäre, wobei die in dem Abluftstrom enthaltene Restwärme verloren geht.

Ausgehend von diesem Stand der Technik liegt der Erfindung die Aufgabe zugrunde, eine heißgasbetriebene Trocknungsvorrichtung mit integrierter Thermalölerhitzung zu schaffen, welche sich durch eine gegenüber bekannten Lösungen deutlich erhöhte Energieeffizienz auszeichnet. Ferner soll sie einfach aufgebaut sein und sich durch hohe Betriebssicherheit und Langlebigkeit auszeichnen.

Diese Aufgabe wird erfindungsgemäß mit einer heißgasbetriebenen Trocknungsvorrichtung mit integrierter Thermalölerhitzung nach dem Oberbegriff des Patentanspruches 1 dadurch gelöst, dass der Kessel eine Thermalöl-gekühlte Brennkammer aufweist.

Durch Einsatz einer Thermalöl-gekühlten Brennkammer, kann aus dem Brennraum übermäßige Hitze, welche, wie eingangs erwähnt, die Gefahr einer Verschlackung mit sich bringt, durch das durch die Wand strömende Thermalöl effizient abgeführt werden. Entsprechend ist es nicht mehr notwendig, den Brenner mit hohem Luftüberschuss zu betreiben, so dass insgesamt ein geringerer HeißgasVolumenstrom erzeugt wird. Da die für die Erhitzung des Thermalöls notwendige Wärmeenergie bereits im Brennraum abgezogen wird, gibt dieser keine weitere Wärmeenergie durch einen außerhalb des Heißgaskessels angeordneten Thermalöl-Wärmetauscher mehr ab. Durch die nunmehr moderaten Feuerungstemperaturen kommt es gleichzeitig zu einem reduzierten NOₓ-Anteil im Heißgas und damit zu verbesserten Abgaswerten. Der erfindungsgemäß ausgebildete Kessel zeichnet sich ferner durch geringe Betriebskosten aus, da weder Druckluft noch Kühlwasserbedarf besteht.

Durch den im Vergleich zu dem aus dem Stand der Technik bekannten Trocknungsvorrichtungen geringen HeißgasVolumenstrom mit hoher Temperatur (die Heißgastemperatur wird nicht mehr durch einen nachgeschalteten Thermalöl-Wärmeaustausch abgesenkt) kann in der vor dem Trockner angeordneten Mischkammer entsprechend ein höherer Anteil an Umluft mit dem Heißgas gemischt werden, um die geforderten Trocknereintrittstemperaturen zu erreichen, so dass ein entsprechend verminderter Anteil als Abgas in die Atmosphäre ausgestoßen wird. Berechnungen der Anmelderin haben ergeben, dass die eingesetzte Brennstoffwärme in Form von Heißgas und erhitztem Thermalöl mit bis zu 99% Wirkungsgrad ausgenutzt werden kann. Abgesehen von den Wärme- und Strahlungsverlusten, den Verlusten durch unvollständige Verbrennung und durch unverbranntes Brenngut in der Asche sind keine weiteren Verluste vorhanden, also insbesondere keine Rauchgasverluste, wie sie bei herkömmlichen Kesseln auftreten und dabei ca. 1 %/20°C ausmachen.

Vorzugsweise weist die Vorrichtung einen Thermalölkreislauf auf, so dass das Thermalöl in einem geschlossenen Leitungssystem zirkuliert. Dabei nimmt das Thermalöl, wie bereits beschrieben, Verbrennungswärme im Kessel auf, welche für verschiedene Verarbeitungsprozesse, beispielsweise zum Heißpressen von Spanplatten, benötigt wird.

Die Thermalöl-Kühlung der Brennkammer kann auf verschiedene Weise realisiert sein. Vorzugsweise ist die Brennkammerwand zumindest teilweise, bevorzugt vollständig, mit einer Thermalöl-Kühlung versehen. Durch Ausbildung der Brennkammerwand als Thermalöl-Wärmetauscher kann entsprechend der Anteil an ausgemauerter Wand im Kessel reduziert werden. Hierdurch können in erheblichem Maße Bauvolumen und damit Investitionskosten eingespart werden, da eine ausgemauerte Brennkammerwand stets den Nachteil eines sehr hohen Platzbedarfes mit sich bringt. So wird die Brennkammerwand bevorzugt vollständig als Thermalöl-Wärmetauscher ausgeführt.

Die Thermalöl-gekühlte Brennkammerwand ist nach einer vorteilhaften Lehre der Erfindung als gasdicht geschweißte Rohr-Steg-Rohr Konstruktion ausgeführt. Diese auch als Membranwand oder Flossenwand bezeichnete Wandkonstruktion ist einfach herstellbar und zeichnet sich durch eine hohe Betriebssicherheit und Langlebigkeit aus. Die einzelnen Rohre der Thermalöl-gekühlten Brennkammerwand sind dabei vorzugsweise derart miteinander verbunden, dass das Thermalöl mäanderförmig durch die Rohre der Brennkammerwand strömt. Alternativ können die Rohre auch parallel geschaltet sein, wobei sie dabei bevorzugt bezüglich ihres Durchflusses temperaturabhängig einzeln regelbar und einzeln füllbar, entleerbar und entlüftbar sind. In beiden Alternativen fungiert die Brennkammerwand somit als Durchlauferhitzer für das Thermalöl, welches seinerseits durch Aufnahme von Wärmeenergie die Brennkammer kühlt.

Der Kessel kann unterschiedlich ausgeführt sein. Nach einer vorteilhaften Lehre der Erfindung ist er als Thermalöl-Durchlauferhitzer mit Wanderrostfeuerung (Wanderrostkessel) ausgebildet, wobei fester und/oder granulatförmiger Brennstoff auf einen beispielsweise hydraulisch angetriebenen Rost aufgegeben werden, auf dem er im Kessel verbrennt und am Ende des Rostes als Asche mittels Förderschnecken abgezogen und einem Aschecontainer zugeführt wird. Vorzugsweise umfasst der Wanderrostkessel auch einen Thermalöl-gekühlten Rost.

Da in einem Wanderrostkessel selbst keine Partikelabscheidung erfolgt, ist nach einer weiteren vorteilhaften Lehre der Erfindung vorgesehen, dass in Strömungsrichtung des Heißgases hinter dem Kessel ein Heißgaszyklon zum Ausbrand und zur Abscheidung glühender Partikel vorgesehen ist. Durch die zirkulierende Strömung des Heißgases im Zyklon erfolgt hierbei auch eine nochmals verbesserte Durchmischung des Heißgases.

Nach einer weiteren vorteilhaften Lehre der Erfindung umfasst die Vorrichtung eine von der Primärluftzuführung abzweigende und in die Heißgasableitung aus dem Zyklon mündende Umgehungsleitung zur Mischung eines Teils der Primärluft des Kessels mit dem aus dem Zyklon ausströmenden entstaubten Heißgas. Dies bedeutet, dass ein Teil der in den Kessel eingeleiteten Primärluft abgezweigt wird und mit dem aus dem Zyklon ausströmenden Heißgas gemischt wird. Hierdurch ist es möglich, die Heißgastemperatur noch vor einer evtl. vor dem Trockner angeordneten Mischkammer auf den gewünschten Wert zu regeln.

Der Kessel des Heißgaserzeugers kann alternativ auch als Wirbelschichtkessel ausgebildet sein. Bei einer Wirbelschichtfeuerung wird der gasförmige, flüssige, staubförmige oder feste Brennstoff verschiedener Körnung in einem aus inertem, feinkörnigen Bettmaterial bestehenden stationären Wirbelbett verbrannt. Hierbei bildet ein Gemisch aus Brennstoff, Asche, Sand, Kalk usw. das Bettmaterial. Dieses Gemisch wird dabei durch den Düsenboden aufwärts geblasene Primärluft derart aufgewirbelt, dass es bei einer bestimmten Strömungsgeschwindigkeit in vielen Eigenschaften einer Flüssigkeit ähnelt. Der Wärmeaustausch innerhalb des Wirbelbettes und damit der Ausbrand auch von minderwertigeren Brennstoffen sind daher besser als bei herkömmlichen Kesseln zur Heißgaserzeugung. Durch diese Eigenschaft kann der Verbrennungsvorgang bei relativ niedriger Temperatur (850°C - 900°C) ablaufen, wobei die Bildung von thermischen Stickoxiden weitgehend verhindert wird. Ebenso kann in der Wirbelschicht durch Zugabe von Absorptionsmitteln wie beispielsweise Kalkstein, die Einbindung des vom Brennstoff abgegebenen Schwefels erfolgen.

Auch im Falle eines Thermalöl-gekühlten Wirbelschichtkessels, welcher bereits für sich genommen eine Neuerung darstellt, ist die Thermalöl-Kühlung der Brennkammer bevorzugt durch eine zumindest teilweise mit einer Thermalöl-Kühlung versehene Brennkammerwand realisiert. Hierbei bietet es sich insbesondere an, die oberhalb der Wirbelschicht angeordnete Nachbrennkammer, welche üblicherweise zylindrisch geformt ist, in Membranwandbauweise, d.h. wiederum mit einer gasdichten Rohr-Steg-Rohr Konstruktion auszuführen. Der Wärmeübergang zwischen den Verbrennungsgasen und der gekühlten Brennkammerwand findet hierbei durch Strahlung statt.

Nach einer weiteren bevorzugten Ausführungsform der Erfindung ist in dem Wirbelschichtkessel wenigstens eine mit Thermalöl durchströmbare Tauchheizwand vorgesehen. Diese ist bevorzugt im Bereich der Wirbelschicht angeordnet, so dass hier ein Wärmeübergang zwischen dem Wirbelbett und dem durch die Tauchheizflächen strömenden Thermalöl durch Konvektion stattfindet.

Das Heißgas verlässt den Wirbelschichtkessel oberseitig über eine dort angesetzte Heißgasleitung. Nach einer bevorzugten Lehre der Erfindung umfasst die Vorrichtung eine in die Heißgasleitung des Wirbelschichtkessels einmündende Umgehungsleitung zur Mischung eines Teils der Sekundärluft des Kessels mit dem aus dem Wirbelschichtkessel ausströmenden Heißgas. Wird der an die Heißgasleitung angeschlossene Trockner mit niedriger Last gefahren, können durch diese zusätzliche Lufteindüsung die Heißgastemperatur bei unverändert hoher Brennkammertemperatur gesenkt werden.

Unabhängig davon, ob der Kessel als Wanderrostkessel oder Wirbelschichtkessel ausgebildet ist, weist er wenigstens eine Feuerung für festen und granulatförmigen Brennstoff und/oder wenigstens einen Brenner für staubförmigen Brennstoff auf. Der Kessel kann somit an die abhängig von dem Anwendungshintergrund jeweils verfügbaren Brennstoffe angepasst werden. Im Falle des Einsatzes in der holzverarbeitenden Industrie kann es sich bei dem Staub z.B. um Holzstaub handeln, welcher beim Schleifen von Spanplatten anfällt. Als feste Brennstoffe kommen beispielsweise innerbetriebliche Holz- und Produktionsreste sowie Rinden und Resthözer oder auch geeignete Altholzsortimente.

Die dem Kessel zugeführte Primär- und Sekundärluft kann jeweils durch einen Luftvorwärmer vorgeheizt werden, wobei die Luftvorwärmer an den Thermalöl-Kreislauf angeschlossen sind. Hierdurch geht überschüssige Thermalöl-Wärme dem Prozess nicht verloren, sondern wird unmittelbar der Verbrennung wieder zugeführt, was zu einer weiteren Steigerung des Wirkungsgrades führt. Zweckmäßigerweise sind die Luftvorwärmer parallel an den Thermalölkreislauf angeschlossen. Falls keine überschüssige Thermalölwärme zur Verfügung steht, können die Luftvorwärmer einfach überbrückt werden.

Die erfindungsgemäße Trocknungsvorrichtung zeichnet sich unter anderem dadurch aus, dass sie die Bereitstellung von Heißgas für die Trocknung im Trockner ermöglicht, dessen Temperatur an die Menge und die Art des im Trockner zu trocknenden Gutes angepasst werden kann. Hierzu weist die Vorrichtung nach einer besonders vorteilhaften Lehre der Erfindung eine in Strömungsrichtung hinter der Heißgasleitung angeordnete Mischkammer und eine den Ausgang des Trockners mit der Mischkammer verbindende Umluftleitung auf. Hierdurch kann einerseits die Temperatur des in den Trockner direkt eingeleiteten Heißgases präzise eingestellt werden und andererseits die Wärme des aus dem Trockner ausströmenden Gases effizient wiederverwendet werden, so dass eine vergleichsweise geringe Abgasmenge in die Atmosphäre ausgestoßen wird. Um die in der Mischkammer mit dem Heißgas zu mischende Umluft wirksam von den getrockneten Partikeln zu befreien, ist nach dem Trockner eine Abscheidevorrichtung, beispielsweise eine Zykloneinheit, integriert.

Der Trockner selbst kann als Trommelrohrtrockner oder Stromrohrtrockner ausgebildet sein.

Die eingangs erwähnte Aufgabe wird verfahrensmäßig mit einem Verfahren zur Trocknung von partikelförmigen Gut, wobei in einem Kessel Heißgas erzeugt wird, welches über eine Heißgasleitung einem Trockner zugeführt wird, wo es das partikelförmige Gut unter Wärmeabgabe trocknet, dadurch gelöst, dass im Kessel ein Wärmeübergang auf Thermalöl als Wärmeträgermedium erfolgt.

Für die Vorteile des erfindungsgemäßen Verfahrens gilt das vorstehend Gesagte sinngemäß.

Im Folgenden wird die Erfindung anhand einer Ausführungsbeispiele darstellenden Zeichnung näher erläutert. Es zeigen:
- Fig. 1: eine heißgasbetriebene Trocknungsvorrichtung mit Thermalöl-Erhitzung nach dem Stand der Technik,
- Fig. 2: eine erste Ausführung der erfindungsgemäßen heißgasbetriebenen Trocknungsvorrichtung mit integrierter Thermalöl-Erhitzung mit einem Wanderrostkessel im Schemabild und
- Fig. 3: eine heißgasbetriebene Trocknungsvorrichtung mit integrierter Thermalöl-Erhitzung gemäß der Erfindung in einer zweiten Ausführungsform mit einem Wirbelschichtkessel.

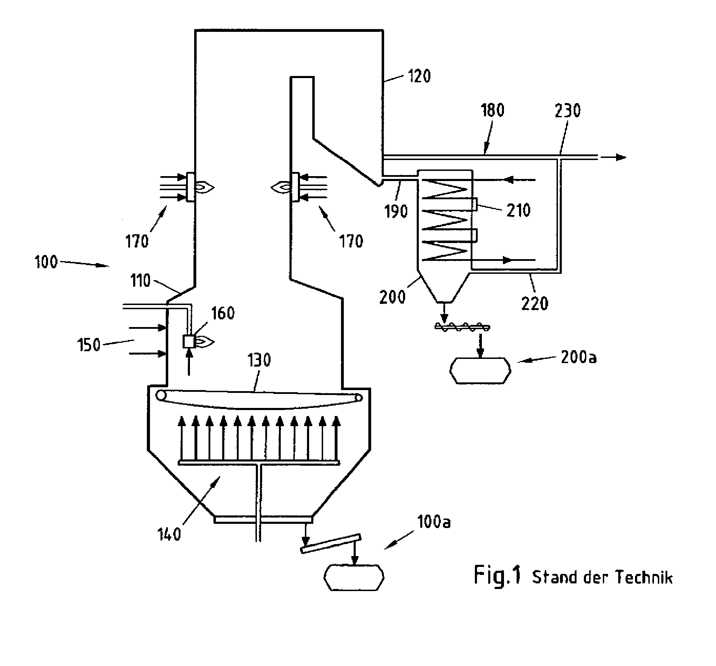

In Fig. 1 ist eine heißgasbetriebene Trocknungsvorrichtung mit integrierter Thermalöl-Erhitzung nach herkömmlicher Bauart dargestellt. Solche Trocknungsvorrichtungen werden bevorzugt in der holzverarbeitenden Industrie zur Trocknung partikelförmiger Güter, wie Spänen, die zur Produktion von Spanplatten eingesetzt werden, eingesetzt, wobei das durch das Heißgas erhitzte Thermalöl für verschiedene Prozesse, beispielsweise zum Pressen von Spanplatten, für das Imprägnieren und Aufpressen von Dekorpapier sowie für Fernwärme- und Heizungsanlagen, benötigt wird.

Der Heißgaserzeuger 100 ist in üblicher Bauart mit einer vollständig ausgemauerten Brennkammer 110 und einem zweiten Zug 120 mit ebenfalls ausgemauerter Brennkammer, welcher zur Begrenzung der Kesselbauhöhe abwärts gerichtet ist, ausgeführt. Vorliegend ist der Heißgaserzeuger 100 als Rostkessel mit einem oberhalb einer Primärlufteindüsung 140 angeordneten Wanderrost 130 ausgebildet. Über eine im Folgenden noch näher beschriebene Aufgabeeinheit 150 wird fester oder granulatförmiger Brennstoff auf den Wanderrost 130 aufgegeben und mit einem gasbetriebenen Startbrenner 160 gezündet. Die Asche des verbrannten Brennstoffes fällt vom Wanderrost auf den Kesselboden und wird über einen Schneckentrieb in einem Aschecontainer 100a gesammelt.

Oberhalb des Wanderrostes 130 und des Brenners 160 befinden sich ferner eine Anzahl weiterer Brenner 170, welche mit staubförmigem Brennstoff oder Erdgas betrieben werden. In dem Heißgaserzeuger 100 der Fig. 1 werden Heißgase sehr hoher Temperatur (> 900°C) erzeugt, deren Temperatur nur durch das Eindüsen eines hohen Luftüberschusses unterhalb einer im Bezug auf eine mögliche Schlackebildung kritischen Temperatur von ca. 950°C gehalten werden kann.

Die Heißgase, welche aufgrund der hohen Temperatur einen hohen Stickoxidanteil haben, strömen in Folge des Luftüberschusses mit einem hohen Volumenstrom durch den ebenfalls vollständig ausgemauerten zweiten Zug 120 und von dort aus zum überwiegenden Teil in eine Heißgasleitung 180. Ein geringerer Teil der Heißgase strömt über einen Bypass-Strang 190 in einen separaten Thermalöl-Kessel 200, welcher mit einem Thermalöl-Wärmetauscher 210 versehen ist. Dieser hat gleichzeitig die Funktion eines Zyklons, so dass die im Thermalöl-Kessel 200 abgeschiedenen Partikel in einer Containereinheit 200a gesammelt werden können. Beim Durchströmen des Thermalölkessels 200 verliert der durch die durch den Bypass-Strang 190 aus dem zweiten Zug 120 der Brennkammer 110 abgeleitete Heißgasanteil einen großen Teil seiner Wärmeenergie und strömt mit vergleichsweise niedriger Temperatur (ca. 350° - 400°C) durch eine weitere Leitung 220 zu einem Mischer 230, wo sich die beiden Teilgasströme wieder vereinen. Von dort strömt das Heißgas mit hohem Volumenstrom bei vergleichsweise niedriger Temperatur zu einer unmittelbar vor dem Trockner angeordneten Mischkammer (jeweils nicht dargestellt), wo der Heißgasstrom durch Zumischung eines geringen Teils des aus dem Trockner wieder ausströmenden und als Umluft verwendeten Gases auf die erforderliche Trocknereingangstemperatur eingestellt wird.

Als nachteilig an der vorstehend beschriebenen Konstruktion ist anzusehen, dass Heißgas mit hohem Volumenstrom und letztlich vergleichsweise niedriger Temperatur (ca. 600°C) erzeugt wird, die nur eine geringe Zumischung von Umluft erlaubt, um die gewünschte Trocknereintrittstemperatur zu erreichen, so dass ein hoher Teil der aus dem Trockner austretenden Gase als Abgase in die Atmosphäre ausgestoßen werden muss. Somit besitzt der vorstehend beschriebene Trockner einen unbefriedigenden Wirkungsgrad und, wie vorstehend erläutert, einen hohen Stickoxidanteil infolge der hohen Temperaturen in der Brennkammer.

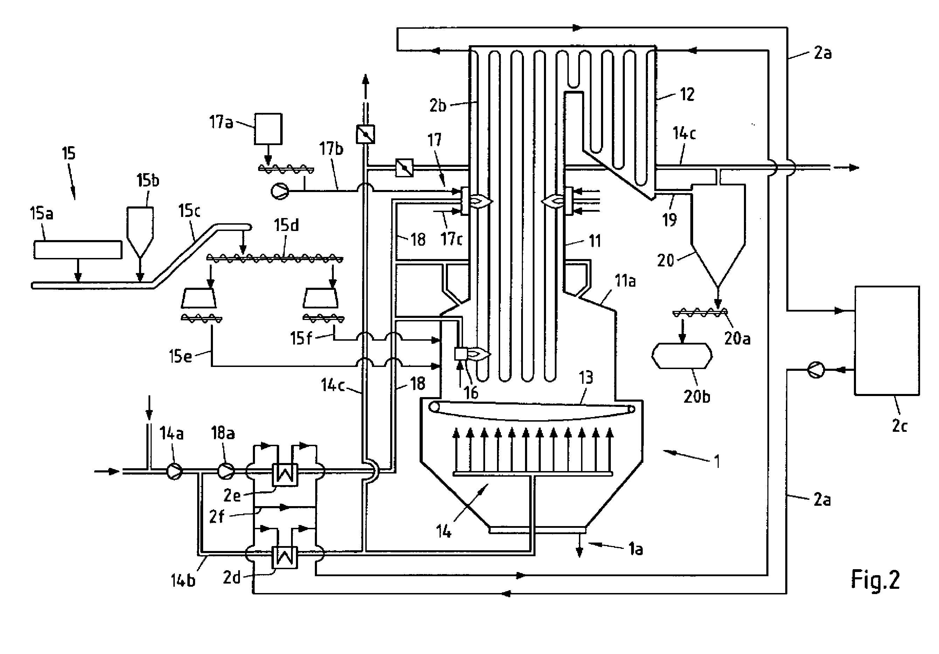

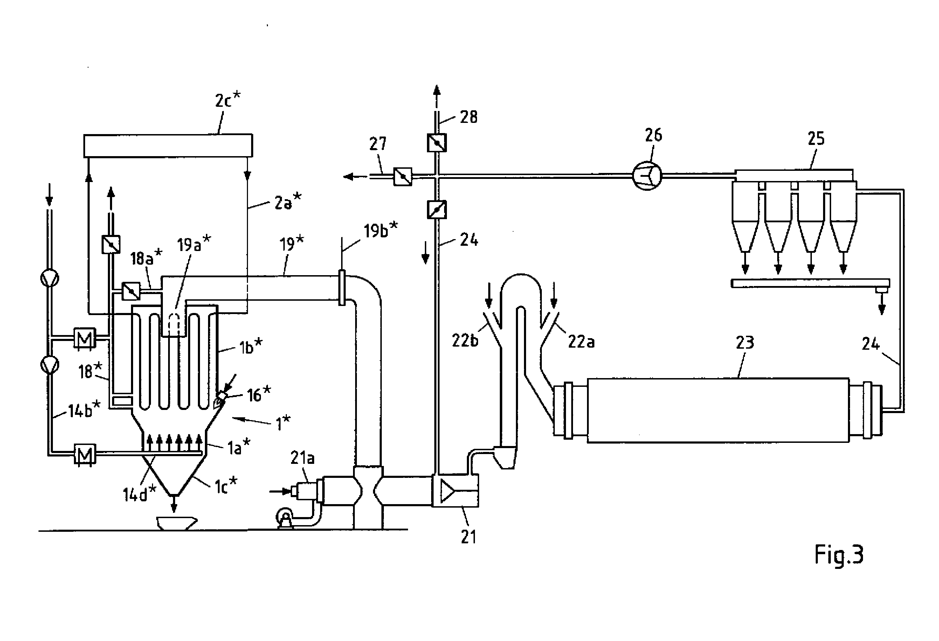

In Fig. 2 ist nun eine erfindungsgemäße Trocknungsvorrichtung mit integrierter Thermalölerhitzung dargestellt, wobei hierbei neben der Funktion und den Vorteilen des Heißgaserzeugungskessels auch die Luftzuführung und die Brennstoffaufgabe näher erläutert werden. Das Zusammenwirken zwischen Heißgaserzeuger und dahinter geschaltetem Trockner wird im Zusammenhang mit Fig. 3 näher erläutert und gilt sinngemäß ebenso für die in Fig. 2 dargestellte Vorrichtung.

Die Trocknungsvorrichtung gemäß Fig. 2 umfasst einen vorliegend im Wesentlichen zylindrisch geformten Kessel 1 zur Heißgaserzeugung, welcher ebenso wie der im Zusammenhang mit Fig. 1 beschriebene Kessel eine Brennkammer 11 und einen abwärts gerichteten zweiten Zug 12 aufweist. Erfindungsgemäß weist der Kessel 1 eine Thermalöl-gekühlte Brennkammer 11 auf. Vorliegend ist die Thermalöl-Kühlung dadurch realisiert, dass die Brennkammerwand vollständig als gasdicht geschweißte Rohr-Steg-Rohr Konstruktion (Membranwand) ausgeführt ist und somit keinerlei Ausmauerung mehr aufweist. Hierdurch wird zunächst ein geringeres Bauvolumen realisiert, da eine Membranwand, durch die das Thermalöl nach Art eines Durchlauferhitzers fließt, einen wesentlich geringeren Platzbedarf als eine ausgemauerte Wand benötigt. Wie in Fig. 2 deutlich zu erkennen, sind die einzelnen Rohre 2b der nur schematisch dargestellten Membranwand mäanderförmig miteinander verbunden, so dass das Thermalöl entsprechend mäanderförmig durch die Rohre 2b der Brennkammerwand strömen. Dabei umfasst die Thermalöl-Kühlung, wie in Fig. 2 erkennbar, sowohl die eigentliche Brennkammer 11 als auch den zweiten Zug 12. Durch die Thermalöl-Kühlung der Brennkammerwand besteht nicht länger die Gefahr, dass im Zuge der Heißgaserzeugung zu hohe Temperaturen (> 950°C) erreicht werden, da die Wärme durch die gekühlte Brennkammerwand effizient unmittelbar am Ort ihrer Entstehung abgeführt und auf das Thermalöl als Wärmeträgermedium übertragen werden kann.

Hierdurch ist es möglich den Kessel 1 mit geringerem Luftüberschuss zu fahren, so dass insgesamt ein vergleichsweise geringer Volumenstrom an Heißgas mit vergleichsweise hoher Temperatur erzeugt werden kann.

Das durch die Brennkammerwand strömende Thermalöl fließt außerhalb dieser in einem geschlossenen Kreislauf 2a, wobei die in der Brennkammer 11 aufgenommene Wärme - beispielsweise erhöht sich die Thermalöltemperatur während des Durchströmens durch die Brennkammerwand 2b von 245°C auf 285°C (Leistungsaufnahme ca. 12MW) - in den verschiedenen vorstehend benannten Produktionsprozessen, die vorliegend nur schematisch mit 2c bezeichnet sind, wieder abgegeben wird.

Vorliegend ist der Heißgaserzeuger 1 als Thermalöl-Durchlauferhitzer mit Wanderrostfeuerung (Wanderrostkessel) Wanderrostkessel ausgebildet. Damit umfasst er wiederum einen leicht geneigt geführten Wanderrost 13, auf den, wie im Folgenden eingehend beschrieben wird, fester und granulatförmiger Brennstoff über eine Brennstoffaufgabeeinheit 15 aufgegeben wird. Die für die Verbrennung dieser Brennstoffe benötigte Primärluft wird über eine Primärluftzuführung 14 über die Breite des Wanderrostes 13 in die Brennkammer gleichmäßig eingedüst. Hierzu wird ein Primärluftstrom durch ein Zentralluftgebläse 14a verdichtet, über die Primärluftleitung 14b von unten in den Kesselraum eingedüst und durchströmt somit das auf dem Wanderrost 13 gelagerte Brenngut, welches seinerseits am Ende des Wanderrostes 13 einem Ascheabzug 1a und letztlich dem in Fig. 1 dargestellten Aschecontainer 100a zugeführt wird.

Falls die durch Durchströmen der Brennkammerwand 2b aufgenommene Thermalölwärme in den Produktionsprozessen 2c nicht vollständig abgerufen wird, somit also überschüssige Thermalölwärme besteht, kann diese über einen Wärmetauscher 2d der Primärluft zugeführt werden, so dass sie dem Heißgaserzeugungsprozess insgesamt nicht verloren geht. Dieser Wärmetauscher 2d kann jedoch für den Fall, dass keine überschüssige Thermalölwärme vorliegt durch eine Überbrückungsleitung 2f überbrückt werden.

Von der Primärluftleitung 14b zweigt eine Sekundärluftleitung 18 ab, in welcher ein zusätzliches Gebläse (Booster-Gebläse) zur weiteren Verdichtung der Sekundärluft integriert ist. Diese Sekundärluft kann durch einen weiteren Wärmetauscher 2e ebenfalls durch überschüssige Thermalölwärme vorgeheizt werden, wobei die Wärmetauscher 2d, 2e vorliegend parallel geschaltet in den Thermalöl-Kreislauf 2a integriert sind. Die Sekundärluft strömt durch die Leitung 18 an verschiedenen Stellen in die Brennkammer 11 des Heißgaserzeugers 1 ein. So wird sie zunächst zur Speisung des erdgasbetriebenen Startbrenners 16 eingesetzt und strömt ferner über eine Ringleitung an mehreren Stellen in einen konischen Bereich 11a der Brennkammer 11 ein. Schließlich wird die Sekundärluft, wie in Fig. 2 ebenfalls gezeigt, auch zur Speisung der Staubbrenner 17 verwendet.

Die festen und granulatförmigen Brennstoffe werden über eine zuvor schon erwähnte Aufgabeeinheit 15 in den Heißgaserzeuger 1 eingeleitet. Im Einzelnen werden die festen Brennstoffe - hierbei handelt es sich beispielsweise um innerbetriebliche Holz- und Produktionsreste sowie Rinden und Resthölzer vom Holzlagerplatz (extern angelieferte unbehandelte Hölzer können ebenfalls verbrannt werden) - über Zugböden 15a und Trogkettenförderer 15c, gefolgt von einer Verteilerschnecke 15d, welche die Brennstoffe auf Dosierschnecken aufteilt, über Aufgabeleitungen 15e, 15f und einen nicht näher dargestellten Aufgabeschacht in die Brennkammer 11 eingeleitet, wo sie auf den Wanderrost 13 fallen und von dort in im Wesentlichen horizontaler Richtung durch die Brennkammer 11 transportiert werden. Der granulatförmige Brennstoff, welcher beispielsweise einem Recyclingprozess geeigneter Altholzsortimente entnommen wird, wird aus einem Speichersilo 15b über ein eigenes Austragsystem (nicht dargestellt) ebenfalls auf den Trogkettenförderer 15c aufgegeben und über den vorstehend beschriebenen Verteilmechanismus in die Brennkammer 11 eingeleitet.

Ferner sind bei dem Heißgaserzeuger 1 der erfindungsgemäßen Trocknungsvorrichtung mehrere, vorliegend vier, Brenner 17 für staubförmige Brennstoffe vorgesehen. Diese sind bevorzugt tangential zur zylindrischen Brennkammerwand angeordnet, wodurch die Durchmischung des Heißgases verbessert wird. Die Brenner 17 werden mit staubförmigen Brennstoff (Holzstäube) aus einem Staubsilo 17a über Dosierschnecken und eine Zuführungsleitung 17b, in welche sie mittels Druckluft gefördert werden, den Brennern 17 zugeführt. Ersatzweise können diese auch mit Gas betrieben werden, wie durch die Pfeile 17c angedeutet. Durch den alleinigen Betrieb des Heißgaserzeugers 1 mit den Staubbrennern 17 können minimale Lasten gefahren werden.

Das in dem Wanderrostkessel 1 erzeugte Heißgas strömt aus dem zweiten Zug 12 über eine Abzugsleitung 18 in einen Heißgaszyklon 20, welcher dem Ausbrand und der Abscheidung glühender Partikel aus dem Heißgas dient. Diese werden über eine geeignete Abzugseinheit 20a einem Aschecontainer 20b zugeführt. Das aus dem Zyklon ausströmende Heißgas kann, falls im Trockner aufgrund niedriger Last entsprechend niedrige Heißgastemperaturen gefordert sind, unmittelbar nach Austritt aus dem Heißgaszyklon 20 mit über eine Umgehungsleitung 14c aus der Primärluftleitung 14b abgezweigter Mischluft gemischt werden, um die gewünschte Heißgastemperatur einzustellen. Das ggf. mit Mischluft gemischte Heißgas strömt nun durch eine Heißgasleitung 19 zu der dem Trockner vorgeordneten Mischkammer, deren Funktion im Zusammenhang mit Fig. 3 noch eingehend beschrieben wird.

Bei dem in Fig. 3 gezeigten Heißgaserzeuger handelt es sich im Unterschied zu dem der Fig. 2 um einen Wirbelschichtkessel 1*. Dieser umfasst eine zylindrische Wirbelbettkammer 1a* einen darunter angeordneten Ascheabzugstrichter 1c und eine darüber angeordnete, ebenfalls zylindrisch ausgebildete Nachbrennkammer 1b mit vergrößertem Innendurchmesser. Beispielsweise kann die Wirbelbettkammer 1a*, in der ein Wirbelbett aufgewirbelt wird, einen Durchmesser von 6m aufweisen, während die Nachbrennkammer 1b einen Durchmesser von 8m aufweist. Erfindungsgemäß ist der Wirbelschichtkessel 1* Thermalölgekühlt. Vorliegend ist die Wandung der Nachbrennkammer 1b vollständig als Rohr-Steg-Rohr Konstruktion (Membranwand) vorgesehen, wobei durch die Rohre der Membranwand wiederum ein in einem geschlossenen Kreislauf 2a* zirkulierendes Thermalöl mäanderförmig strömt.

Die Primärluft wird wiederum durch eine Primärluftleitung 14b*, welche optional eine Thermalöl-gespeisten Luftvorwärmer aufweist, in die Wirbelbettkammer 1a* des Wirbelschichtkessels 1* eingeleitet, wobei im Unterschied zur Vorrichtung der Fig. 2 hierbei die Primärluft und nicht die Sekundärluft nachverdichtet wird. Die in den Wirbelschichtkessel 1* eingeleitete Primärluft wird sodann vom Düsenboden 14d* derart aufgewirbelt, dass ein stationäres Wirbelbett, bestehend aus einem Gemisch aus Brennstoff, Asche, Sand, Kalk usw., entsteht. Nicht dargestellt ist eine im Wirbelbett vorgesehene Tauchheizwand, über welche ebenfalls Prozesswärme abgezogen und in den Thermalöl-Kreislauf eingeleitet werden kann.

Die Sekundärluft wird durch eine Sekundärluftleitung 18* der Nachbrennkammer 1b zugeführt, wobei diese ebenso wie der Brennstoff, dessen Zuführung aus Gründen der Übersichtlichkeit in Fig. 3 nicht dargestellt ist, tangential in die Nachbrennkammer 1b* eingedüst werden. Hierdurch wird in dem Wirbelschichtkessel 1* ein Wirbel und eine besonders gute Durchmischung der Luft und der Brennstoffe ermöglicht. Durch die teils zylindrisch, teils konische Form des Wirbelschichtkessels 1* insgesamt verbunden mit einem oberseitigen Heißgasabzug wird ein Zykloneffekt erreicht, mittels welchem bereits im Kessel 1* gröbere Partikel abgeschieden und an dessen unterem Ende ausgetragen werden können, so dass ein gesonderter Heißgaszyklon, wie im Falle des Wanderrostkessels, nicht erforderlich ist. Auch der Wirbelschichtkessel 1* weist einen erdgasbetriebenen Zündbrenner 16 auf.

Das im Wirbelschichtkessel 1* produzierte Heißgas wird über ein Tauchrohrabschnitt 19a in eine ausgemauerte Heißgasleitung 19* abgezogen. Unmittelbar oberhalb des Wirbelschichtkessels 1* kann über eine Umgehungsleitung 18a* Sekundärluft in die Heißgasleitung 19* eingedüst werden, um bei unveränderter Kesseltemperatur die Temperatur des aus dem Kessel 1* ausgeleiteten Heißgases bei Bedarf absenken zu können. Hierdurch sind beispielsweise Heißgastemperaturen zwischen 350°C und 850°C möglich. Im Falle des Ausfalls des Wirbelschichtkessels kann das Heißgasrohr 19* durch einen Schieber 19b* geschlossen werden, wobei ein erdgasbetriebener Reservebrenner 21a die Gasbeheizung übernimmt.

Das Heißgas wird in einer Mischkammer 21 mit vom Trocknerausgang über eine Trocknerumluftleitung 24 rückgeleiteter Umluft auf die gewünschte Trocknereintrittstemperatur, beispielsweise ca. 470°C, eingestellt. Sodann strömt das mit Umluft gemischte Heißgas in eine Materialaufgabeeinheit 22, in der zunächst über einen ersten Aufgabestutzen 22b Nassmaterial und anschließend über einen zweiten Aufgabestutzen 22a Trockenmaterial in den Gasstrom eingeleitet wird. Der mit den zu trocknenden Partikeln beladene Gasstrom strömt sodann in den beispielsweise als Stromrohr- oder Trommelrohrtrockner ausgebildeten Trockner 23 ein und wird dort getrocknet.

Das aus dem Trockner 23 ausströmende Gas, welches eine Temperatur von ca. 125° bis 130°C aufweist, wird sodann in eine Zykloneinheit 25 eingeleitet, in welcher die getrockneten Partikel abgeschieden und anschließend einer weiteren Bearbeitung zugeführt werden. Sodann strömt das entstaubte Gas durch ein Trocknergebläse 26 und schließlich wieder in die Mischkammer 21, wo es mit dem Heißgasstrom gemischt werden kann. Der Anteil der Umluft im in den Trockner eingeblasenen Heißgasstrom kann durch entsprechende Regelklappen präzise eingestellt werden. Durch diese können nicht benötigte Anteile des Umluftstroms auch einer Abluftreinigungsanlage 27 oder einem Notkamin 28 zugeführt werden.

Abschließend soll durch eine zahlenmäßige Gegenüberstellung nochmals der wesentliche Vorteil der erfindungsgemäßen Trocknungsvorrichtung gegenüber den aus dem Stand der Technik bekannten Trocknungsvorrichtungen dargestellt werden:

| | Heißgaserzeuger | Thermalöl | O₂-Gehalt | Temperatur | Menge zum Trockner | Umluft | Menge zum NEF |
|---|---|---|---|---|---|---|---|
| | [MW] | [MW] | [Vol%] | [°C] | [Nm³/h] | [Nm³/h] | [Nm³/h] |
| Stand der Technik | 36 | 12 | 10,5 | 610 | 106.600 | 42.000 | 146.000 |
| Erfindung | 36 | 12 | 4,0 | 813 | 70.000 | 73.000 | 110.000 |

Wie der ersten Zeile der Tabelle zu entnehmen ist wird bei dem aus dem Stand der Technik bekannten Kessel mit ausgemauerter Brennkammerwand (vgl. Fig. 1) Heißgas mit einem Volumenstrom von 106.600 Nm³/h und einer Temperatur von 610°C bei einer Brennerleistung von 36 MW erzeugt, wobei die Wärmeübergangsleistung im externen Thermalöl-Kessel etwa 12 MW beträgt. Dieser hohe Volumenstrom ist dadurch zu erklären, dass infolge der nichtgekühlten ausgemauerten Brennerwand ein hoher Sauerstoffüberschuss eingestellt werden muss (10,5 Vol%), um das Überschreiten der kritischen Temperatur 950°C zu verhindern. Aufgrund des hohen Volumenstroms bei vergleichsweise geringer Temperatur kann entsprechend ein nur geringer Umluftvolumenstrom dem Heißgas hinzugemischt werden, um die benötigte Trocknereintrittstemperatur einzustellen. Dies bedeutet, dass ein vergleichsweise hoher Volumenstrom (146.000 Nm³/h) der Abluftreinigung, d.h. dem Nasselektrofilter (NEF), zugeführt werden muss.

Im Falle der Erfindung wird bei identischer Brennerleistung von 36MW und identischer Thermalöl-Heizleistung von 12MW Heißgas mit einem Volumenstrom von 70.000 Nm³/h bei einer Temperatur von 813°C erzeugt. Der Grund hierfür ist, dass die Verbrennung im Thermalöl-gekühlten Heißgaserzeuger mit einem vergleichsweise geringem Sauerstoffüberschuss (4,0 Vol%) betrieben werden kann. Da ferner der Wärmeübergang auf das Thermalöl bereits im Brennraum stattfindet, ist die Temperatur des aus dem Brenner ausströmenden Heißgases mit 813°C bei gleichzeitig vergleichsweise geringem Volumenstrom vergleichsweise hoch. Entsprechend kann in der Mischkammer ein hoher Anteil an Umluft dem Heißgas hinzugemischt werden (73.000 Nm³/h), so dass dementsprechend ein verringerter Anteil der Abluftreinigung zugeführt werden muss (110.000 Nm³/h).

Mit erfindungsgemäß vorgesehenen Thermalöl-gekühlten Brennkammern ist es somit möglich, Heißgas für den Trocknungsprozess mit geringem Volumenstrom und hoher Temperatur bereitzustellen, so dass die aus dem Trockner ausströmende und als Umluft eingesetzte Gasströmung zu einem im Vergleich zu aus dem Stand der Technik bekannten Vorrichtungen weit größeren Teil wiederverwertet werden kann, so dass der Anteil der in die Atmosphäre ausgestoßenen Wärmeenergie sinkt und der Wirkungsgrad der Vorrichtung steigt.

## Patentansprüche

1. Heißgasbetriebene Trocknungsvorrichtung mit integrierter Thermalölerhitzung, umfassend einen Kessel (1, 1*) zur Heißgaserzeugung und einen in Strömungsrichtung des Heißgases hinter dem Kessel (1, 1*) angeordneten Trockner (23), in welchen das Heißgas einströmt,
**dadurch gekennzeichnet, dass** der Kessel (1, 1*) eine Thermalöl-gekühlte Brennkammer (11, 11*) aufweist.

2. Trocknungsvorrichtung nach Anspruch 1,
**dadurch gekennzeichnet, dass** die Vorrichtung einen Thermalölkreislauf (2a, 2a*) umfasst.

3. Trocknungsvorrichtung nach Anspruch 1 oder 2,
**dadurch gekennzeichnet, dass** die Brennkammerwand (11, 11*) zumindest teilweise, bevorzugt vollständig, mit einer Thermalöl-Kühlung versehen ist.

4. Trocknungsvorrichtung nach Anspruch 3,
**dadurch gekennzeichnet, dass** die Brennkammerwand als gasdicht geschweißte Rohr-Steg-Rohr-Konstruktion ausgeführt ist.

5. Trocknungsvorrichtung nach Anspruch 4,
**dadurch gekennzeichnet, dass** die Rohre (2b) derart miteinander verbunden sind, dass das Thermalöl mäanderförmig durch die Rohre (2b) der Brennkammerwand strömt.

6. Trocknungsvorrichtung nach Anspruch 4,
**dadurch gekennzeichnet, dass** die Rohre parallel geschaltet sind.

7. Trocknungsvorrichtung nach Anspruch 6,
**dadurch gekennzeichnet, dass** die Rohre einzeln bezüglich ihres Durchflusses temperaturabhängig regelbar sind und einzeln füllbar, entleerbar und entlüftbar sind.

8. Trocknungsvorrichtung nach einem der Ansprüche 1 bis 7,
**dadurch gekennzeichnet, dass** der Kessel (1) als Thermalöl-Durchlauferhitzer mit Wanderrostfeuerung ausgebildet ist.

9. Trocknungsvorrichtung nach Anspruch 8,
**dadurch gekennzeichnet, dass** die Wanderrostfeuerung einen Thermalöl-gekühlten Rost umfasst.

10. Trocknungsvorrichtung nach Anspruch 8 oder 9,
**dadurch gekennzeichnet, dass** die Trocknungsvorrichtung einen in Strömungsrichtung des Heißgases hinter dem Kessel (1) angeordneten Heißgaszyklon (20) zum Ausbrand und Abscheidung glühender Partikel aufweist.

11. Trocknungsvorrichtung nach Anspruch 9,
**dadurch gekennzeichnet, dass** die Vorrichtung eine von der Primärluftzuführung (14) abzweigende und in die Heißgasableitung aus dem Zyklon (20) mündende Umgehungsleitung (14c) zur Mischung eines Teils der Primärluft des Kessels (1) mit dem aus dem Zyklon (20) ausströmenden entstaubten Heißgas umfasst.

12. Trocknungsvorrichtung nach einem der Ansprüche 1 bis 7,
**dadurch gekennzeichnet, dass** der Kessel als Wirbelschichtkessel (1*) ausgebildet ist.

13. Trocknungsvorrichtung nach Anspruch 12,
**dadurch gekennzeichnet, dass** in dem Wirbelschichtkessel (1^{*}) wenigstens eine mit Thermalöl durchströmbare Tauchheizwand vorgesehen ist.

14. Trocknungsvorrichtung nach Anspruch 12 oder 13,
**dadurch gekennzeichnet, dass** die Vorrichtung eine in die Heißgasleitung (19*) des Wirbelschichtkessels (1*) einmündende Umgehungsleitung (18a*) zur Mischung eines Teils der Sekundärluft des Kessels (1*) mit dem aus dem Kessel (1*) ausströmenden Heißgas umfasst.

15. Trocknungsvorrichtung nach einem der Ansprüche 1 bis 14,
**dadurch gekennzeichnet, dass** der Kessel (1, 1*) wenigstens eine Feuerung für festen und granulatförmigen Brennstoff und/oder wenigstens einen Brenner (17) für staubförmigen Brennstoff aufweist.

16. Trocknungsvorrichtung nach einem der Ansprüche 1 bis 15,
**dadurch gekennzeichnet, dass** die Vorrichtung einen ersten Luftvorwärmer (2d) zum Vorwärmen der Primärluft und/oder einen zweiten Luftvorwärmer (2e) zum Vorwärmen der Sekundärluft umfasst, wobei die Luftvorwärmer (2d, 2e) an den Thermalölkreislauf (2a) angeschlossen sind.

17. Trocknungsvorrichtung nach Anspruch 15 und 16,
**dadurch gekennzeichnet, dass** die Luftvorwärmer (2d, 2e) parallel an den Thermalölkreislauf (2a) angeschlossen sind.

18. Trocknungsvorrichtung nach einem der Ansprüche 1 bis 17,
**dadurch gekennzeichnet, dass** die Vorrichtung eine in Strömungsrichtung hinter der Heißgasleitung (19*) angeordnete Mischkammer (21) und eine den Ausgang des Trockners (23) mit der Mischkammer (21) verbindende Umluftleitung (24) aufweist.

19. Trocknungsvorrichtung nach einem der Ansprüche 1 bis 18,
**dadurch gekennzeichnet, dass** der Trockner (23) als Trommelrohrtrockner oder Stromrohrtrockner ausgebildet ist.

20. Verfahren zur Trocknung von partikelförmigen Gut, wobei in einem Kessel (1, 1*) Heißgas erzeugt wird, welches über eine Heißgasleitung (19, 19*) einem Trockner (23) zugeführt wird, wo es das partikelförmige Gut unter Wärmeabgabe trocknet,
**dadurch gekennzeichnet, dass** im Kessel (1, 1*) ein Wärmeübergang auf Thermalöl als Wärmeträgermedium erfolgt.

21. Verfahren nach Anspruch 20,
**dadurch gekennzeichnet, dass** das Themalöl durch den Wärmeübergang im Kessel (1, 1*) von 245°C auf 285°C, insbesondere von 260°C auf 285°C erhitzt wird.

22. Verfahren nach Anspruch 20 oder 21,
**dadurch gekennzeichnet, dass** die Brennerleistung im Kessel (1, 1*) ca. 36 MW beträgt und der Wärmeübergang auf das Thermalöl mit einer Leitung von ca. 12 MW erfolgt.

23. Verfahren nach einem der Ansprüche 20 bis 22,
**dadurch gekennzeichnet, dass** das Heißgas vor dem Einströmen in den Trockner (23) in einer Mischkammer (21) mit aus dem Trockner (23) ausströmender, von den getrockneten Partikeln gereinigter Umluft zur Einstellung der Trocknereinstrittstemperatur gemischt wird.

24. Verfahren nach einem der Ansprüche 20 bis 23,
**dadurch gekennzeichnet, dass** überschüssige Thermalöl-Wärme an die Umgebungsluft abgegeben wird.
